# FASCICULE DE BREVET EUROPEEN

(11) **EP 0 403 355 B1**
(45) Date de publication et mention de la délivrance du brevet: **11.05.1994**
(21) Numéro de dépôt: 90401597.1
(22) Date de dépôt: 11.06.1990
(51) Int. Cl.: F16K 3/18

(54) **Vanne à clapet**
Schieberventil
Gate valve

(30) Priorité: 14.06.1989 FR 8907884
(43) Date de publication de la demande: 19.12.1990
(73) Titulaire: ETS J.C. COUREAU, F-91420 Morangis (FR)
(72) Inventeur: Coureau, Jean Claude, F-91420 Morangis (FR)
(74) Mandataire: Derambure, Christian

(56) Documents cités:
- US-A- 3 185 435
- US-A- 4 291 861
- US-A- 4 681 329

## Description

### VANNE COMPORTANT UN DISPOSITIF DE COMMANDE

L'invention concerne les vannes comportant un dispositif de commande selon le préambule de la revendication 1.

On connaît déjà des vannes à clapet comprenant un corps de vanne ayant deux ouvertures en regard présentant deux sièges de vanne, un clapet comprenant un corps central, une garniture d'étanchéité et une contre garniture opposées (dénommées ensemble par la suite, de façon conventionnelle les garnitures) de part et d'autre du corps pouvant coopérer avec les deux sièges des deux ouvertures en regard de la vanne, des billes intermédiaires d'écartement pouvant coopérer avec des alvéoles ménagées dans les faces internes en regard du corps et des garnitures et un organe élastique de rappel des deux garnitures l'une vers l'autre, le dit clapet étant mobile dans son ensemble et déformable en direction axiale entre un état rétracté où les billes sont logées dans des alvéoles en regard du corps et des garnitures et un état expansé où les billes sont sorties de certaines alvéoles du corps ou des garnitures décalées de celles des garnitures ou du corps, le dit clapet pouvant se trouver dans trois positions caractéristiques respectivement d'ouverture totale où il dégage les ouvertures de la vanne, de fermeture étanche où les garnitures sont en regard et appliquées de façon étanche sur les sièges respectifs, et intermédiaire où il est placé en regard des ouvertures de la vanne avec les garnitures écartées axialement de leurs sièges respectifs, la vanne comprenant en outre un dispositif de commande.

L'état de la technique est bien illustré notamment par le document US-A-4 291 861. Différents modes de réalisation des dispositifs de commande de vannes mentionnées ci-avant ont été proposés dans les documents FR-2 279 002, US-4 491 145, US-4 718 637, US-2 626 774, US-4 333 631 et US-4 681 329. Dans les deux documents US-4 718 637 et FR-2 279 002, le clapet est monté mobile à coulissement. Le dispositif de commande assure donc le déplacement en coulissement du clapet. Dans le document US-A-4 333 631, le moyen support est pivotable autour d'un axe excentré et réalise également la fonction de commande du clapet.

Les dispositifs de commande de l'état de la technique et donc les vannes comportant ces dispositifs de commande présentent un certain nombre de limites ou inconvénients : la pression différentielle maximale permettant le fonctionnement de la vanne est souvent limitée à 40 millibars. Or, pour un certain nombre d'applications ou dans un certain nombre de circonstances, il serait nécessaire d'avoir un plafond de pression différentielle supérieur, par exemple de l'ordre ou supérieur à 1 bar. Ensuite, l'étanchéité qui est un paramètre essentiel au fonctionnement des vannes pose généralement problème et nécessite la mise en oeuvre de moyens complexes et coûteux. Egalement, l'encombrement est souvent important parce que le dispositif de commande a une course égale à celle du clapet (voir document FR-2 279 002). Ou, alternativement, la course nécessaire au déplacement du clapet entre ses positions extrêmes est importante (document US-4 718 637).

L'invention a donc pour but de pallier les inconvénients des dispositifs de commande pour vannes connus à ce jour et, plus particulièrement, de permettre un fonctionnement avec une pression différentielle maximale suffisamment élevée, d'obtenir l'étanchéité du dispositif de commande de façon efficiente mais à partir d'organes standards, de limiter l'encombrement du dispositif de commande et de la vanne, de limiter les courses nécessaires au déplacement du clapet. Ces objectifs sont combinés avec l'objectif consistant à rendre le clapet indépendant du carter de la pompe pour son guidage lors de son déplacement, et pour son démontage.

A cet effet, l'invention propose une vanne à clapet comprenant un corps de vanne ayant deux ouvertures en regard présentant deux sièges de vanne, un clapet comprenant un corps central, deux garnitures de part et d'autre du corps pouvant coopérer avec les deux sièges des deux ouvertures en regard de la vanne, des billes intermédiaires d'écartement pouvant coopérer avec des alvéoles ménagées dans les faces internes en regard du corps et des garnitures et un organe élastique de rappel des deux garnitures l'une vers l'autre, le clapet étant mobile dans son ensemble et déformable en direction axiale entre un état rétracté où les billes sont logées dans les alvéoles en regard du corps et des garnitures et un état expansé où les billes sont sorties des alvéoles du corps décalées de celles des garnitures, le clapet pouvant se trouver dans trois positions caractéristiques respectivement d'ouverture totale, où il dégage les ouvertures de la vanne, de fermeture étanche, où les garnitures d'étanchéité sont en regard et appliquées de façon étanche sur les sièges respectifs, et intermédiaire, où il est placé en regard des ouvertures de la vanne avec les garnitures écartées axialement de leurs sièges respectifs, la vanne comprenant en outre un dispositif de commande des moyens de commande pour manoeuvrer la vanne, un organe de commande associé aux moyens de commande pour manoeuvrer la vanne et monté à coulissement entre deux parties extrêmes, où le clapet est respectivement en positions d'ouverture totale et de fermeture étanche, des moyens de liaison, associés à et commandés par l'organe de commande et reliés au clapet de manière à permettre, sous la commande des moyens de commande pour manoeuvrer la vanne, de déplacer le clapet de sa position d'ouverture totale à sa position intermédiaire et de celle-ci à sa position de fermeture étanche, et inversement. Selon l'invention, les moyens de liaison comprennent en premier lieu, des moyens support du clapet, ces moyens support permettant le pivotement du clapet dans son ensemble autour d'un axe parallèle à et écarté de son propre axe, lesdits moyens support étant solidaires en rotation des garnitures du clapet et reliés au corps de vanne tout en restant déplaçables à pivotement entre une première position extrême d'ouverture et une seconde position extrême où ils sont bloqués pour un pivotement unidirectionnel ultérieur ; et, en second lieu, des moyens de manoeuvre du clapet, distincts des moyens support du clapet, reliés, quant à eux, à l'organe de commande et au corps du clapet de manière à permettre soit son pivotement autour de son axe de pivotement avec les garnitures, tant que les moyens support ne sont pas dans leur seconde position extrême, soit son pivotement relatif autour de son axe, les garnitures étant bloquées à rotation mais libres à coulissement axial lorsque les moyens support sont dans leur seconde position extrême, de manière à faire sortir les billes des alvéoles du corps du clapet et à placer ainsi le clapet dans son état expansé.

L'invention concerne notamment des vannes tiroirs ou des vannes pendulaires.

Les autres caractéristiques de l'invention seront mieux comprises dans la description qui suivra, en référence aux dessins annexés dans lesquels :
- La figure 1 est une vue schématique en coupe par un plan transversal d'une vanne selon l'invention avec son dispositif de commande, le clapet étant en position de totale ouverture.
- La figure 2 est une vue schématique en coupe par un plan axial sur la ligne II-II de la figure 1 de la vanne et du dispositif de commande, le clapet étant en position de fermeture étanche.
- La figure 3 est une vue schématique, partielle, à plus grande échelle, selon la ligne III-III de la figure 1, par un plan axial, le clapet étant représenté en position expansée.
- La figure 4 est une vue en élévation, similaire à celle de la figure 1, à plus grande échelle, illustrant les éléments constitutifs du dispositif de commande et de clapet dans diverses positions.
- Les figures 5 et 6 dont deux vues schématiques du même type que les vues des figures 3 et 4 d'un autre mode de réalisation.
- Les figures 7A et 7B sont deux vues schématiques, partielles, en coupe par un plan axial, du clapet de la variante objet des figures 5 et 6 respectivement à l'état rétracté et à l'état expansé.

L'invention concerne les vannes 2 comportant un dispositif de commande 1.

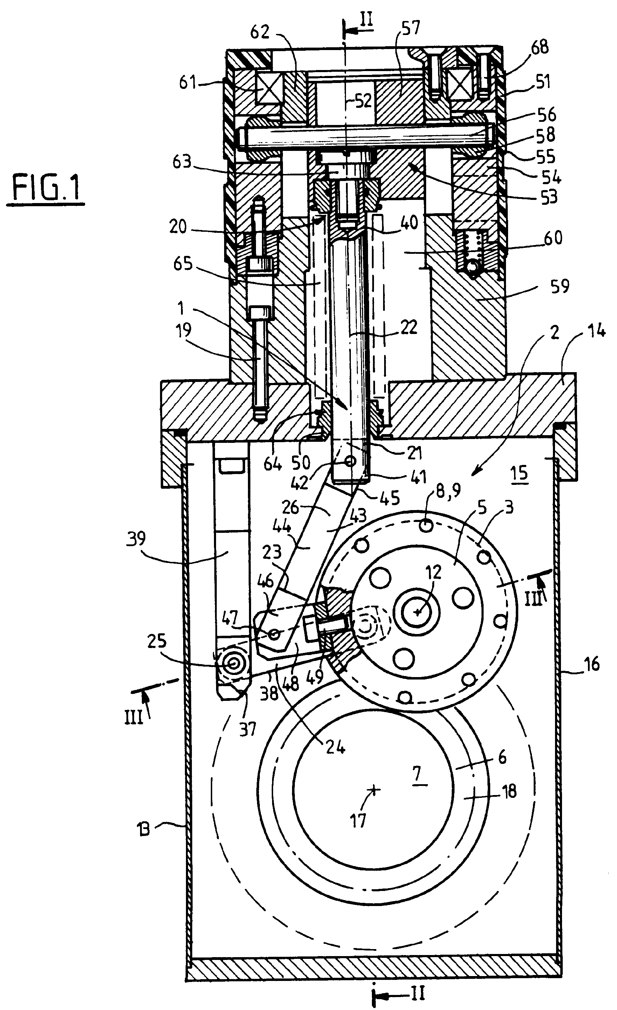

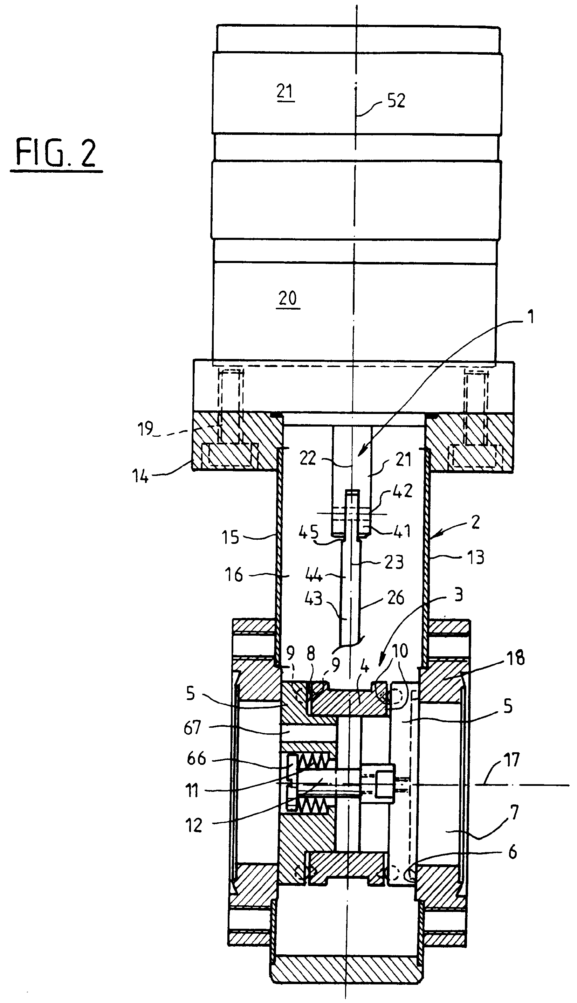

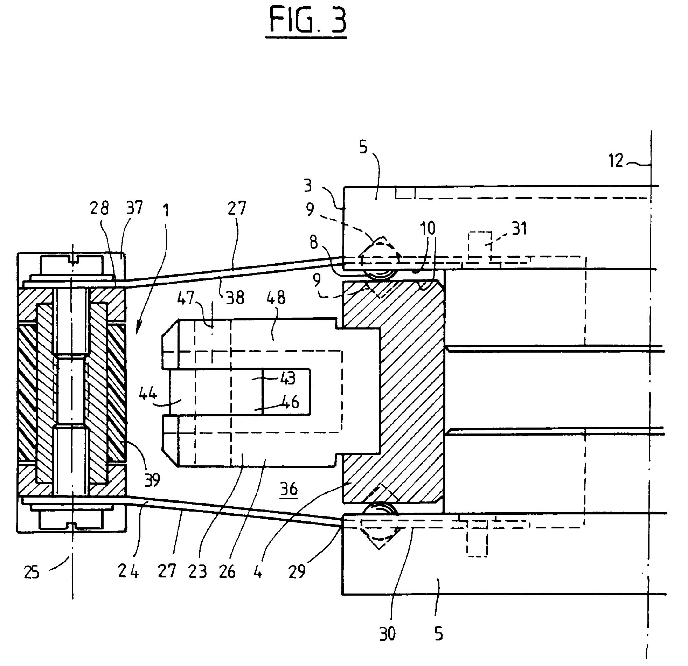

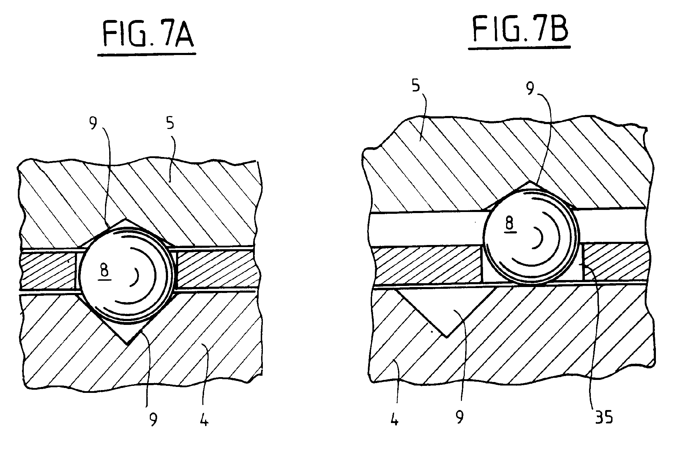

Une vanne 2 comporte un clapet 3 comprenant un corps central 4, une garniture d'étanchéité et une contre garniture opposée (dénommées ensemble par la suite, de façon conventionnelle les garnitures 5) de part et d'autre du corps 4 pouvant coopérer avec les deux sièges 6 de deux ouvertures 7 en regard de la vanne 2, des billes 8 intermédiaires d'écartement pouvant coopérer avec des alvéoles 9 ménagées dans les faces internes 10 en regard du corps 4 et des garnitures 5 et un organe élastique de rappel 11 des deux garnitures 5 l'une vers l'autre. Le clapet 3 est mobile dans son ensemble et déformable en direction axiale le long de son axe 12, perpendiculaire aux faces 10, entre un état rétracté où les billes 8 sont logées dans les alvéoles 9 en regard du corps 4 et des garnitures 5 (figures 2, 7A), et un état expansé où les billes 8 sont sorties des alvéoles 9 du corps 4 décalées de celles des garnitures 5 (figures 3, 5, 7B). Le clapet 3 peut se trouver dans trois positions caractéristiques respectivement d'ouverture totale, de fermeture intermédiaire et étanche . Dans la position d'ouverture totale (figure 1), le clapet 3 dégage totalement les ouvertures 7. Dans la position de fermeture étanche (figure 2), le clapet 3 est en regard des ouvertures 7, les garnitures 5 étant appliquées de façon étanche sur les sièges 6 respectifs. Dans la position intermédiaire, le clapet 3 est placé dans son ensemble en regard des ouvertures 7, de manière analogue à celle de la position de la fermeture étanche -mais les garnitures 5 sont écartées axialement légèrement de leurs sièges respectifs 6-.

La vanne 2 peut être logée dans un carter 13 comportant une platine principale 14 formant un élément support, deux grandes parois parallèles et en regard l'une de l'autre 15 dans lesquelles sont ménagées les ouvertures 7 et des parois latérales 16 reliant les grandes parois 15 et la platine 14 en fermant le carter 13. Ce carter 13 est réalisé rigidement de manière à supporter les différences de pression mises en oeuvre avec une telle vanne. Les ouvertures 7 sont par exemple de forme générale circulaire d'axe 17 perpendiculaire aux grandes parois 15. Les grandes parois 15 peuvent comporter, autour des ouvertures 7, des éléments rapportés 18 formant sièges, brides, etc... Le carter 13 présente un volume interne suffisant pour permettre au clapet 3 de se trouver dans ses deux positions extrêmes que sont sa position d'ouverture totale et sa position de fermeture ou intermédiaire.

Le dispositif de commande 1 est fixé au carter 13, notamment à la platine 14, par des organes de fixation 19. Ce dispositif de commande 1 comprend des moyens de commande de la manoeuvre 20 à partir desquels est commandé le dispositif 1, un organe de commande 21 associé aux moyens de commande de la manoeuvre 20, monté à coulissement le long d'un axe 22 entre deux positions extrêmes où le clapet 3 est repectivement en positions d'ouverture totale et de fermeture étanche, des moyens de liaison 23 associés à et commandés par l'organe de manoeuvre 21 et reliés au clapet 3 de manière à permettre, sous la commande des moyens de commande de la manoeuvre 20 de déplacer le clapet 3 de sa position d'ouverture totale à sa position intermédiaire et de sa position intermédiaire à sa position de fermeture étanche, et inversement.

L'axe 22 est, dans la forme de réalisation considérée, orthogonal aux axes 12 et 17, perpendiculaire à la platine 14 notamment dans sa zone médiane, placé sensiblement à égale distance des grandes parois 15 et rencontre ou est peu écarté de l'axe 17.

Dans la forme de réalisation décrite, les moyens de commande de la manoeuvre 20 sont à fonctionnement manuel. Cependant, le dispositif selon l'invention peut être adapté pour des moyens de commande de la manoeuvre à fonctionnement électrique, pneumatique ou autres.

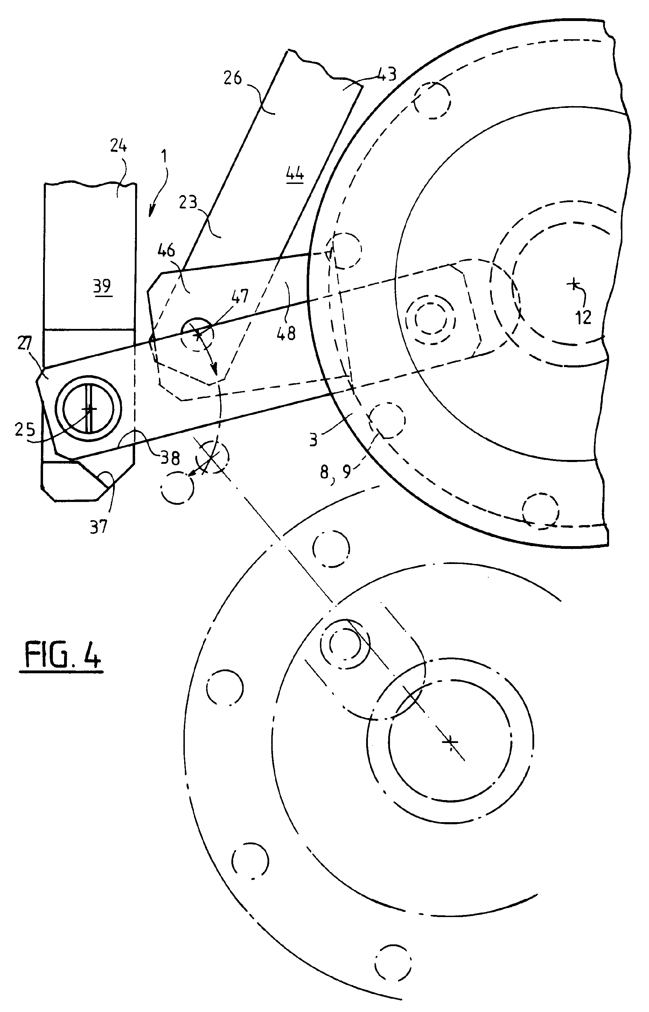

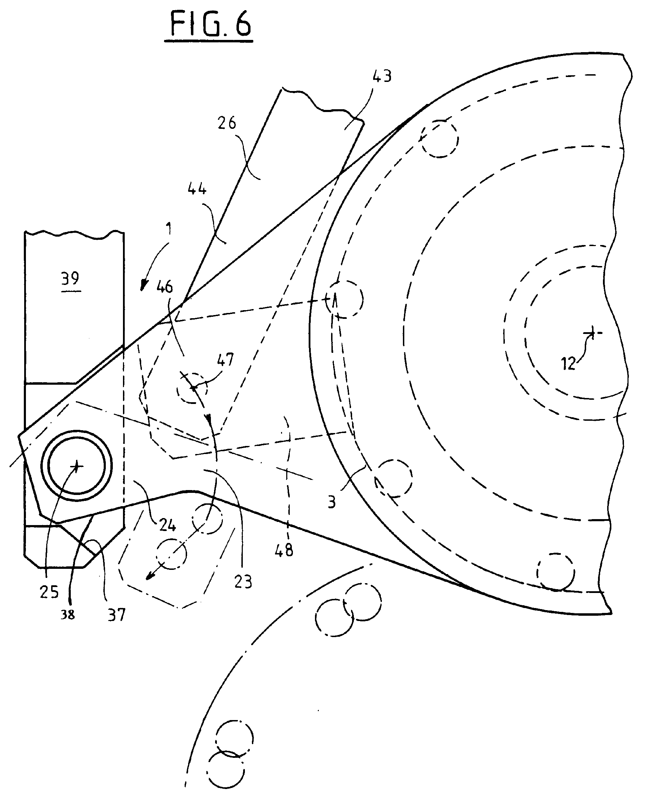

Les moyens de liaison 23 selon l'invention comprennent en premier lieu des moyens support 24 du clapet 3 dans son ensemble, à pivotement autour d'un axe 25 parallèle à et écarté de son propre axe 12, solidaires en rotation des garnitures 5, déplaçables à pivotement entre une première position extrême d'ouverture (en trait plein sur les figures 4 et 6) et une seconde position extrême où ils sont bloqués pour un pivotement unidirectionnel ultérieur (en tireté sur les figures 4 et 6).

Par exemple, l'axe de pivotement 25 est situé entre les ouvertures 7 et la platine 14 en étant décalé pour être rapproché de la paroi latérale 16.

Les moyens de liaison 23 comprennent, en second lieu, des moyens distincts de manoeuvre 26 du clapet 3 reliés à l'organe de commande 21 et au corps 4 du clapet 3 de manière à permettre soit son pivotement autour de son axe de pivotement 25 avec les garnitures 5, tant que les moyens support 24 ne sont pas dans leur seconde position extrême, soit son pivotement relatif autour de son axe 12, les garnitures 5 étant bloquées à rotation autour de leur axe 12 mais libres à coulissement axial le long du même axe 12 lorsque les moyens support 24 sont dans leur seconde position extrême.

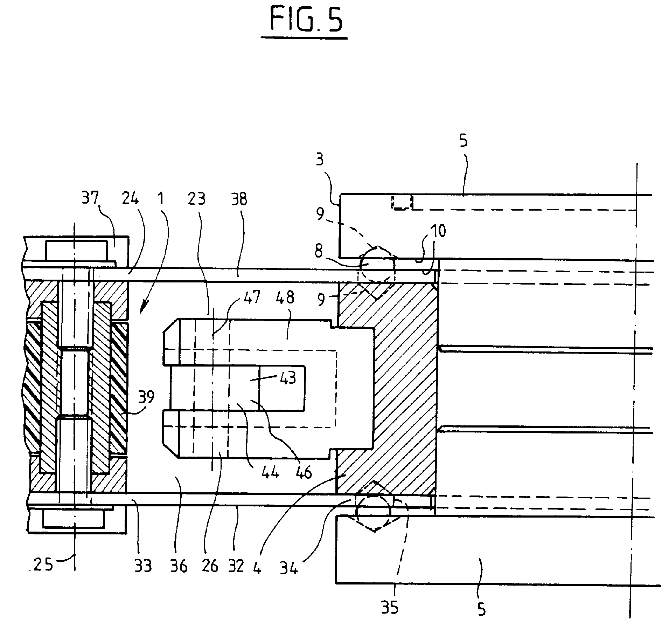

Dans une première forme de réalisation (figure 3), les moyens support 24 comprennent deux lames de ressort 27 élastiquement déformables en sens transversal, placées en regard et écartées transversalement l'une de l'autre, montées à pivotement à l'une de leurs extrémités 28 autour de l'axe de pivotement 25 et fixées rigidement à l'autre extrémité 29 aux garnitures 5 à partir de réserves 30 ménagées dans leurs faces internes 10 et d'organes de fixation 31 représentés schématiquement tels que des vis. Dans une seconde variante de réalisation (figure 5), les moyens support 24 comprennent deux flasques rigides 32 plats, placés en regard et écartés transversalement l'un de l'autre à écartement fixe, montés à pivotement à l'une de leurs extrémités 33 autour de l'axe de pivotement 25 et à leur autre extrémité 34 associés aux garnitures 5 dans leur mouvement de pivotement autour de l'axe 25 et libres par rapport à celles-ci dans leur mouvement de déplacement axial le long de l'axe 12. Dans ce cas, les flasques 32 comportent des ouvertures 35 placées en regard des alvéoles 9 ménagées sur le corps 4. Le corps 4 est enserré entre les deux flasques 32 tout en pouvant glisser à rotation de façon relative par rapport à eux.

Que ce soit dans l'une ou dans l'autre des deux variantes, les lames de ressort 27 ou les flasques 32 s'étendent sensiblement parallèlement à et vers l'extérieur des garnitures 5 dans des plans parallèles ou sensiblement parallèles aux grandes parois 15. Entre les lames de ressort 27 d'une part ou les flasques 32 d'autre part existe un espace libre 36 permettant le passage ou le logement des moyens de liaison 23, ainsi que cela est décrit.

Une butée fixe 37 définit la seconde position extrême des moyens support 24. Le chant 38 d'au moins une lame de ressort 27 ou d'un flasque 32 peut venir contre la butée 37 pour définir cette seconde position extrême. Cette butée fixe 37 est préférentiellement située à proximité de l'axe de pivotement 25. A cet effet, il peut être prévu une pièce support fixe 39 fixée rigidement par exemple à la platine 14 notamment perpendiculairement à celle-ci et au voisinage de la paroi latérale 16, cette pièce support 39 supportant l'axe de pivotement 25 du clapet 3 et étant conformée pour constituer la butée 37.

L'organe de commande 21 est une tige guidée pour pouvoir coulisser, exclusivement (sans pouvoir pivoter). Cette tige 21 est associée à l'une de ses extrémités 40, extérieure au carter 13 aux moyens de commande de la manoeuvre 20 et articulée à son autre extrémité 41, située dans le carter 13, par un axe 42, à une tringlerie 43 associée au corps 4 du clapet 3. L'axe 42 est parallèle aux axes 12, 17, 25. Le guidage de la tige de commande 21 à coulissement est obtenu au moyen d'organes appropriés.

La tringlerie 43 comporte une biellette de liaison 44 articulée à l'une de ses extrémités 45 à la tige de commande 21 autour de l'axe 42 et à son autre extrémité 46 autour d'un axe 47 à une chape 48 fixée rigidement au corps 4 du clapet 3 et s'étendant par rapport à celui-ci sensiblement radialement et dans un plan transversal médian.

La chape 48 peut être fixée à la périphérie cylindrique du corps central 4 au moyen d'organes de fixation appropriés 49. La biellette de liaison 44 et la chape 48 peuvent être logées ou traverser l'espace libre 36 défini précédemment.

La tige de commande 21 saille d'une ouverture 50 ménagée dans la platine 14, l'axe d'articulation 42 étant situé à proximité de la platine 14. La pièce support 39 est, comme déjà indiqué, décalée latéralement par rapport aux ouvertures 7 de la vanne 3, la tige de commande 21 placée en regard de ces ouvertures 7 en position médiane de la platine 14, la biellette de liaison 44 et la chape 48 situées entre le clapet, la pièce support et la platine.

Ainsi que cela résulte de ce qui précède, les moyens de commande de la manoeuvre 20 peuvent faire l'objet de différentes variantes de réalisation toutes ayant pour effet de permettre de déplacer la tige de commande 21 à coulissement axial le long de son axe 22. Dans la forme de réalisation représentée sur la figure 1, les moyens de commande de la manoeuvre 20 sont à fonctionnement manuel et comportent un organe de manoeuvre 51 pivotant autour d'un axe 52 et des moyens mécaniques 53 de transformation de mouvement reliés à l'organe de manoeuvre 51 et à l'organe de commande 21 de manière à transformer le mouvement de pivotement de l'organe de manoeuvre 51 en un mouvement de coulissement de l'organe de commande 21.

Plus précisément, l'organe de manoeuvre 51 se présente sous la forme d'un bouton pivotant autour de l'axe 52 coaxial avec l'axe 22 de l'organe de commande 21.

Les moyens mécaniques de transformation de mouvement 53 sont conçus de manière à permettre le déplacement du clapet 3 entre ses deux positions extrêmes par un déplacement limité de l'organe de manoeuvre 51 notamment au maximum un tour et préférentiellement une fraction de tour, tel qu'un quart de tour. A cet effet, les moyens mécaniques de transformation de mouvement 53 comportent une chemise cylindrique 54 associée à l'organe de manoeuvre 51, montée à pivotement autour de son axe 52, pourvue de rampes hélicoïdales 55 de profil convenable. Un axe transversal 56 est porté par un noyau 57 et saillie des deux côtés de ce dernier. Il est pourvu de galets 58 coopérant avec les rampes hélicoïdales 55. Le noyau 57 est guidé axialement à coulissement exclusivement, le long de l'axe 52, par rapport à une pièce support 59 pourvue à cet effet d'un guidage axial 62. la pièce support 59 comporte un trou central axial 60 dans lequel est monté le noyau 57 et la tige de commande 21. La pièce support 59 sert également à guider la chemise pivotante 54 ainsi que l'organe de manoeuvre 51 grâce à des paliers appropriés 61.

L'organe de commande 21 est une tige fixée à son extrémité 40 au noyau 53 au moyen d'organes de fixation 63 et guidée, du côté de son extrémité opposée 41 à coulissement par un palier 64 monté dans l'ouverture 50. Un organe d'étanchéité tel qu'un soufflet d'étanchéité notamment de type classique, 65, est monté entre les deux extrémités de la tige de commande 21 de manière à isoler l'intérieur du carter 13 du dispositif de commande 1 et de l'extérieur.

Le clapet 3 comporte encore un organe de fixation 66 permettant de fixer ensemble les pièces 4 et 5 afin d'assurer leur maintien coaxial, leur possibilité de déplacement relatif à pivotement autour de l'axe commun 12 et leur écartement le long de l'axe 12. Préférentiellement, cet organe de fixation sert de support à l'organe de rappel 11. Par ailleurs, il est préférentiellement prévu un trou de dégazage 67, dans le clapet 3, apte à permettre une communication entre les deux garnitures 5. Enfin, la garniture d'étanchéité peut comporter un joint d'étanchéité torique coopérant avec le siège 6.

L'invention peut faire l'objet de nombreuses variantes de réalisation. Le dispositif de commande qui vient d'être décrit peut être appliqué aussi bien à une vanne tiroir qu'à une vanne pendulaire.

la vanne selon l'invention fonctionne de la manière suivante : initialement (figure 1) le clapet 3 se trouve par exemple en position de totale ouverture. L'opérateur peut alors agir sur l'organe de manoeuvre 51 de manière à le faire pivoter autour de son axe 52. Selon l'invention, la course de commande est par exemple d'un quart de tour. Le sens du mouvement de pivotement de l'organe de manoeuvre 51 est classiquement celui correspondant au vissage ou au dévissage. Lors du pivotement de l'organe de manoeuvre 51, la chemise 54 est entraînée à pivotement autour de l'axe 52, l'organe de manoeuvre 51 étant solidarisé à la chemise 54 au moyen d'organes de fixation tels que 68. Le noyau 57 étant empêché de coulisser du fait du guidage axial 62, il en est de même de l'axe 56. Dès lors, lors du pivotement de la chemise 54, les galets 58 sont déplacés par les rampes hélicoïdales 55 ce qui provoque le coulissement axial du noyau 57. Ce dernier étant rigidement fixé à la tige de commande 21, celle-ci est déplacée à coulissement axial le long de son axe 22. Dans la position originelle d'ouverture totale, le clapet 3 est placé entre les ouvertures 7 et la platine 14. L'axe 42 est le plus proche de la platine 14, de même que l'axe 47.

Lorsque l'opérateur fait pivoter l'organe de manoeuvre 51 dans le sens de la fermeture de la vanne 2, il provoque, ainsi que mentionné, le coulissement de la tige de commande 21 dans le sens de l'écartement de l'axe 42 de la platine 14 ou encore de son rapprochement avec l'axe 17. Du fait que le clapet 3 est supporté dans son ensemble par les moyens support 24 et que l'axe d'articulation 47 entre la tringlerie 43 et la chape 48 est placée entre le clapet 3 et l'axe 25, le mouvement de coulissement de la tige de commande 21 dans le sens de la sortie depuis l'ouverture 50 a pour effet d'entraîner le clapet 3 porté par les moyens 24 à pivotement autour de l'axe 25. Il est à noter que ce mouvement de pivotement du clapet 3 est obtenu sans nécessiter la présence de galets de roulement ou de guidage du clapet 3. Ce mouvement de pivotement (dans le cas présent et en référence à la figure 1 dans le sens des aiguilles d'une montre) est rendu possible tant que le chant 38 ne vient pas en blocage sur la butée 37. Dans le cas considéré, le clapet 3 est pivoté dans son ensemble de l'ordre de 60° autour de l'axe 25. Alors que la position initiale d'ouverture totale est représentée sur la figure 4 par la lettre A, la situation dans laquelle le chant 38 vient en blocage sur la butée 37 est représentée par la lettre B. Jusqu'à présent, le clapet 3 était dans sa position rétractée ce qui permettait son glissement à coulissement par rotation dans le carter 13. Dans la situation référencée en B, le clapet 3 est dans sa position intermédiaire. Un pivotement ultérieur autour de l'axe 25 n'est plus possible, le chant 38 venant en blocage sur la butée 37. Mais, il est encore possible, sur une course limitée (de la position B à la position C) de faire coulisser l'organe de commande 21, par un déplacement à pivotement de quelques degrés de l'organe de manoeuvre 51. Il s'en suit qu'alors que les garnitures 5 sont bloquées (considérées en élévation par rapport aux figures 1 et 4), le corps central 4 peut être déplacé à pivotement autour de son axe 12 lorsque la biellette de liaison 44 est déplacée de la situation B à la situation C. Ce petit mouvement de pivotement relatif du corps central 4 par rapport aux garnitures 5 a pour effet de faire échapper les billes 8 des alvéoles 9 du corps 4 ce qui a pour effet de faire passer le clapet 3 de son état rétracté à son état expansé. Il est à noter que dans cette situation, les axes 12 et 17 sont coaxiaux, le clapet 3 étant placé exactement en regard des ouvertures 7 ce qui permet de les obturer.

Le mouvement d'ouverture de la vanne est réalisé par les opérations comparables en sens inverse.

## Revendications

1. Vanne (2) à clapet (3) comprenant un corps de vanne ayant deux ouvertures (7) en regard présentant deux sièges (6) de vanne, un clapet (3) comprenant un corps central (4), deux garnitures (5) de part et d'autre du corps (4) pouvant coopérer avec les deux sièges (6) des deux ouvertures (7) en regard de la vanne (2), des billes (8) intermédiaires d'écartement pouvant coopérer avec des alvéoles (9) ménagées dans les faces internes (10) en regard du corps (4) et des garnitures (5) et un organe élastique de rappel (11) des deux garnitures (5) l'une vers l'autre, le dit clapet (3) étant mobile dans son ensemble et déformable en direction axiale entre un état rétracté où les billes (8) sont logées dans les alvéoles (9) en regard du corps (4) et des garnitures (5) et un état expansé où les billes (8) sont sorties des alvéoles (9) du corps (4) décalées de celles des garnitures (5), le dit clapet (3) pouvant se trouver dans trois positions caractéristiques respectivement d'ouverture totale, où il dégage les ouvertures (7) de la vanne, de fermeture étanche, où les garnitures d'étanchéité (5) sont en regard et appliquées de façon étanche sur les sièges (6) respectifs, et intermédiaire, où il est placé en regard des ouvertures (7) de la vanne (2) avec les garnitures (5) écartées axialement de leurs sièges (6) respectifs, la vanne comprenant en outre un dispositif de commande (1) comprenant des moyens de commande (20) pour manoeuvrer la vanne (2), un organe de commande (21) associé aux moyens de commande (20) pour manoeuvrer la vanne (2) et monté à coulissement entre deux parties extrêmes, où le clapet (3) est respectivement en positions d'ouverture totale et de fermeture étanche, des moyens de liaison (23), associés à et commandés par l'organe de commande (21) et reliés au clapet (3) de manière à permettre, sous la commande des moyens de commande (20) pour manoeuvrer la vanne (2), de déplacer le clapet (3) de sa position d'ouverture totale à sa position intermédiaire et de celle-ci à sa position de fermeture étanche, et inversement, caractérisé en ce que les moyens de liaison (23) comprennent en premier lieu, des moyens support (24) du clapet (3), ces moyens support permettant le pivotement du clapet (3) dans son ensemble autour d'un axe (25) parallèle à et écarté de son propre axe (12), lesdits moyens support étant solidaires en rotation des garnitures (5) du clapet (3) et reliés au corps de vanne tout en restant déplaçables à pivotement entre une première position extrême d'ouverture et une seconde position extrême, où ils sont bloqués pour un pivotement unidirectionnel ultérieur ; et, en second lieu, des moyens de manoeuvre (26) du clapet (3), distincts desdits moyens support (24) du clapet (3), reliés, quant à eux, à l'organe de commande (21) et au corps (4) du clapet (3) de manière à permettre soit son pivotement autour de son axe de pivotement (25) avec les garnitures (5), tant que les moyens support ne sont pas dans leur seconde position extrême, soit son pivotement relatif autour de son axe (12), les garnitures (5) étant bloquées à rotation mais libres à coulissement axial lorsque les moyens support (24) sont dans leur seconde position extrême, de manière à faire sortir les billes (8) des alvéoles (9) du corps (4) du clapet (3) et à placer ainsi le clapet (3) dans son état expansé.

2. Vanne (2) à clapet (3) selon la revendication 1, caractérisée en ce que les moyens support (24) comprennent deux lames de ressort (27) élastiquement déformables placées en regard et écartées transversalement l'une de l'autre, montées à pivotement à l'une de leurs extrémités (28) autour de l'axe de pivotement (25) du clapet (3) et fixées rigidement à l'autre de leurs extrémités (29) aux deux garnitures d'étanchéité (5) en s'étendant sensiblement parallèlement à et vers l'extérieur des garnitures (5).

3. Vanne (2) à clapet (3) selon la revendication 1, caractérisée en ce que les moyens support (24) comprennent deux flasques rigides (32) placés en regard et écartés transversalement l'un de l'autre à écartement fixe montés à pivotement à l'une de leurs extrémités (33) autour de l'axe de pivotement (25) et à leur autre extrémité (34) associés aux garnitures (5) dans leur mouvement de pivotement et libres par rapport à celles-ci dans leur mouvement de déplacement axial, les flasques (32) s'étendant sensiblement parallèlement à et vers l'extérieur des garnitures (5).

4. Vanne (2) à clapet (3) selon la revendication 2 ou 3, caractérisée en ce qu'elle comporte au moins une butée fixe (37) définissant la seconde position extrême des moyens support (24), avec laquelle coopère le chant (38) d'au moins une lame de ressort déformable ou un flasque rigide (27, 32).

5. Vanne (2) à clapet (3) selon la revendication 4, caractérisée en ce que la butée fixe (37) est située à proximité de l'axe de pivotement (25) du clapet (3).

6. Vanne (2) à clapet (3) selon l'une quelconque des revendications 1 à 5, caractérisée en ce qu'il comporte une pièce support fixe (39) fixée rigidement à une platine (14) de la vanne (2), supportant l'axe de pivotement (25) du clapet (3) et conformée pour constituer la butée fixe (37).

7. Vanne (2) à clapet (3) selon l'une quelconque des revendications 1 à 6, caractérisée en ce que l'organe de commande (21) est une tige guidée pour pouvoir coulisser exclusivement, associée, à l'une de ses extrémités (40) aux moyens de commande de la manoeuvre (20) et articulée, à son autre extrémité (41) à une tringlerie (43) associé au corps (4) du clapet (3).

8. Vanne (2) à clapet (3) selon la revendication 7, caractérisée en ce que la tringlerie (43) comporte une biellette de liaison (44) articulée à l'une de ses extrémités (45) à la tige de commande (21) et à son autre extrémité (46) à une chape (48) fixée rigidement au corps (4) du clapet (3) et s'étendant par rapport à celui-ci sensiblement radialement et dans son plan transversal médian.

9. Vanne (2) à clapet (3) selon la revendication 8 en combinaison avec l'une des revendications 2 et 3, caractérisée en ce que la chape (48), respectivement la biellette de liaison (44) peut être logée, respectivement traverser un espace libre (36) ménagé entre les lames de ressorts ou les flasques (27, 32) des moyens support (24).

10. Vanne (2) à clapet (3) selon la revendication 6 en combinaison avec l'une des revendications 8 et 9, caractérisée en ce que la tige (21) de commande saille d'une ouverture (50) ménagée dans la platine (14), l'axe d'articulation (42) avec la biellette de liaison (44) étant situé à proximité de la platine (14).

11. Vanne (2) à clapet (3) selon l'une quelconque des revendications 7 à 9, caractérisée en ce que la pièce support (39) est décalée latéralement par rapport aux ouvertures (7) de la vanne (2), la tige de commande (21) placée en regard de ces ouvertures (7) en position médiane de la platine (14), la biellette de liaison (44) et la chape (48) situées entre le clapet (3), la pièce support (39) et la platine (14).

12. Vanne (2) à clapet (3) selon l'une quelconque des revendications 1 à 11, caractérisée en ce que les moyens de commande de la manoeuvre (20) comportent un organe de manoeuvre (51) pivotant et des moyens mécaniques de transformation de mouvement (53) reliés à l'organe de manoeuvre (51) et à l'organe de commande (21) de manière à transformer le mouvement de pivotement de l'organe de manoeuvre (51) en un mouvement de coulissement de l'organe de commande (21).

13. Vanne (2) à clapet (3) selon la revendication 12, caractérisée en ce que l'organe de manoeuvre (51) se présente sous la forme d'un bouton pivotant coaxial avec l'organe de commande (21).

14. Vanne (2) à clapet (3) selon l'une quelconque des revendications 12, 13, caractérisée en ce que les moyens mécaniques de transformation de mouvement (53) comprennent une chemise cylindrique (54) associée à l'organe de manoeuvre (51), montée à pivotement autour de son axe (52) pourvue de rampes hélicoïdales (55), un axe transversal (56) guidé par les rampes hélicoïdales (55) et monté dans un noyau (57) guidé axialement à coulissement exclusivement dans la pièce support (59).

15. Vanne (2) à clapet (3) selon l'une quelconque des revendications 12 à 14, caractérisée en ce que l'organe de commande (21) est une tige fixée à l'une de ses extrémités (40) au noyau (57) et guidée, du côté de son autre partie extrême (41) par un palier (64) de la platine (14) de la vanne (2).

16. Vanne (2) à clapet (3) selon l'une quelconque des revendications 12 à 15, caractérisée en ce que la tige de commande (21) est entourée par un soufflet d'étanchéité (65).

## Patentansprüche

1. Ventilschütz (2), bestehend aus einem Ventilschützgehäuse mit zwei sich gegenüberliegenden Öffnungen (7), zwei Ventilsitzen (6) und einem Ventil (3) mit einem zentralen Ventilkörper (4) und zwei Dichtungen (5) links und rechts des zentralen Ventilkörpers (4), die mit den beiden Ventilsitzen (6) an den beiden Öffnungen (7) zusammenpassen, wobei zwischenwandig angebrachte Kugeln (8) zum Abstandhalten mit entsprechenden Vertiefungen (9) auf der zum zentralen Ventilkörper (4) und den Ventildichtungen (5) hingewendeten Seite zusammenwirken, sowie einem elastischen Rückstellelement (11) zum Zurückstellen der beiden Dichtungen (5) in Bezug aufeinander, wobei das Ventil (3) als Ganzes beweglich angebracht und in Achsrichtung zwischen einer zusammengezogenen Stellung, in der die Kugeln (8) in den dem Ventilkörper (4) und den Dichtungen (5) gegenüberliegenden Vertiefungen (9) liegen, und einer verbreiterten Stellung, in der die Kugeln (8) nicht in den Vertiefungen (9) in dem Ventilkörper (4) liegen und gegenüber den Vertiefungen in den Dichtungen (5) versetzt sind, verformbar ist, wobei das Ventil (3) sich in drei unterschiedlichen charakteristischen Stellungen befinden kann, nämlich einer völlig offenen Stellung, in der es von den Öffnungen (7) im Ventilschütz absteht, einer dichtschließenden Stellung, in der die Dichtungen (5) dicht mit ihren jeweiligen Ventilsitzen (6) zusammengefügt sind sowie einer Zwischenstellung, in der das Ventil (3) sich gegenüber den im Ventilschütz (2) angebrachten Öffnungen (7) befindet, wobei die Dichtungen (5) in Achsrichtung von ihren jeweiligen Ventilsitzen (6) abstehen, während der Ventilschütz weiterhin eine Steuervorrichtung (1) mit Steuerelementen (20) zum Bedienen des Ventilschützes (2) sowie ein den Steuerelementen (20) zugeordnetes Stellorgan (21) zur Bedienung des Ventilschützes (2) besitzt, das zwischen zwei Endstellungen gleitend angebracht ist, in denen das Ventil (3) entweder vollkommen geöffnet oder vollkommen geschlossen ist, sowie dem Stellorgan (21) zugeordnete und von diesem betätigte sowie mit dem Ventil (3) verbundene Verbindungsmittel (23), mit denen unter der Einwirkung der Steuerelemente (20) zur Bedienung des Ventilschützes (2) das Ventil (3) von seiner vollkommen geöffneten Stellung in die Zwischenstellung und von dieser in die vollkommen geschlossenen Stellung und umgekehrt gebracht werden kann, **dadurch gekennzeichnet, daß** die Verbindungsmittel (23) in erster Linie Haltemittel (24) zum Festhalten des Ventils (3) besitzen, wobei diese Haltemittel ein Drehen des Ventils (3) als Ganzes um eine Achse (25) ermöglichen, die parallel zu seiner eigenen Achse (12) und in einem bestimmten Abstand von dieser liegt, wobei die Haltemittel bei der Drehung des Ventils (3) fest mit den Dichtungen (5) und mit dem Ventilschützgehäuse verbunden sind, gleichzeitig jedoch zwischen einer ersten Endstellung - Ventil offen - und einer zweiten Endstellung - Ventil geschlossenen - drehbar sind, in der sie für ein späteres Drehen in einer Richtung blockiert sind, und in zweiter Linie Stellmittel (26) zum Stellen des Ventils (3) besitzen, die sich von den Haltemitteln (24) zum Festhalten des Ventils (3) unterscheiden und ihrerseits mit dem Stellorgan (21) und dem zentralen Körper (4) des Ventils (3) verbunden sind, sodaß sie entweder dessen Drehung mit den Dichtungen (5) um seine Schwenkachse (25) - solange die Haltemittel (24) sich noch nicht in ihrer **zweiten** Endstellung befinden - oder dessen relative Drehung um seine Schwenkachse (12) ermöglichen, wobei die Dichtungen (5) in Drehrichtung blockiert, aber in Achsrichtung verschiebbar sind, wenn die Haltemittel (24) sich in ihrer **zweiten** Endstellung befinden, sodaß die Kugeln (8) aus den Vertiefungen (9) im zentralen Körper (4) des Ventils (3) heraustreten und das Ventil (3) sich in seiner verbreiterten Stellung befindet.

2. Ventilschütz (2) nach Patentanspruch 1, dadurch gekennzeichnet, daß die Haltemittel (24) zwei elastisch verformbare Blattfedern (27) besitzen, die sich gegenüberliegend und in Querrichtung in einem bestimmten Abstand voneinander angeordnet sowie an einem Ende (28) drehbar um die Schwenkachse (25) des Ventils (3) eingebaut und am anderen Ende (29) fest mit den beiden Dichtungen (5) verbunden sind sowie weitgehend parallel zur Außenseite der Dichtungen (5) und in Richtung derselben verlaufen.

3. Ventilschütz (2) nach Patentanspruch 1, dadurch gekennzeichnet, daß die Haltemittel (24) zwei starre Flansche (32) besitzen, die sich gegenüberliegend und in Querrichtung in einem bestimmten Abstand voneinander angeordnet sowie an einem Ende (33) drehbar um die Schwenkachse (25) des Ventils (3) eingebaut und am anderen Ende (34) den beiden Dichtungen (5) bei deren Drehbewegung zugeordnet und bei deren Verschiebung in Achsrichtung frei von diesen sind, wobei die Flansche (32) weitgehend parallel zur Außenseite der Dichtungen (5) und in Richtung derselben verlaufen.

4. Ventilschütz (2) nach Patentanspruch 2 oder 3, dadurch gekennzeichnet, daß er mindestens einen festen Anschlag (37) besitzt, der die zweite Endstellung der Haltemittel (24) bestimmt, mit dem die Kante (38) mindestens einer elastischen Blattfeder (27) oder mindestens eines starren Flansches (32) zusammenwirkt.

5. Ventilschütz (2) nach Patentanspruch 4, dadurch gekennzeichnet, daß der feste Anschlag (37) sich in der Nähe der Schwenkachse (25) des Ventils (3) befindet.

6. Ventilschütz (2) nach Patentanspruch 1 bis 5, dadurch gekennzeichnet, daß er ein festes Trägerteil (39) besitzt, das starr auf einer Platte (14) des Ventilschützes (2) befestigt ist, die Schwenkachse (25) des Ventils (3) trägt und so ausgebildet ist, daß sie den festen Anschlag (37) bildet.

7. Ventilschütz (2) nach Patentanspruch 1 bis 6, dadurch gekennzeichnet, daß das Stellorgan (21) eine derart geführte Stange ist, daß sie ausschließlich gleitend bewegt werden kann sowie an einem Ende (40) mit Steuerelementen (20) und am anderen Ende (41) mit einem dem zentralen Körper (4) des Ventils (3) zugeordneten Gestänge (43) verbunden ist.

8. Ventilschütz (2) nach Patentanspruch 7, dadurch gekennzeichnet, daß das Gestänge (43) eine Verbindungsstange (44) besitzt, die an einem Ende (45) gelenkig mit der Stellstange (21) und am anderen Ende (46) mit einer fest an dem zentralen Körper (4) des Ventils (3) befestigten und in Bezug auf diesen weitgehend radial und auf dessen mittlerer Querebene verlaufenden Gabel (48) verbunden ist.

9. Ventilschütz (2) nach Patentanspruch 8 in Verbindung mit einem der Patentansprüche 2 oder 3, dadurch gekennzeichnet, daß die Gabel (48) bzw. die Verbindungsstange (44) sich in einem zwischen den Blattfedern bzw. Flanschen (27, 32) der Haltemittel (24) befindlichen Freiraum (36) befinden bzw. diesen durchqueren kann.

10. Ventilschütz (2) nach Patentanspruch 6 in Verbindung mit einem der Patentansprüche 8 und 9, dadurch gekennzeichnet, daß die Stellstange (21) aus einer in der Platte (14) angebrachten Öffnung (50) austritt, wobei die Schwenkachse (42) mit der Verbindungsstange (44) sich in der Nähe der Platte (14) befindet.

11. Ventilschütz (2) nach Patentanspruch 7 bis 9, dadurch gekennzeichnet, daß das Trägerteil (39) gegenüber den im Ventilschütz (2) angebrachten Öffnungen (7) seitlich versetzt ist, die Stellstange (21) bei Mittelstellung der Platte (14) diesen Öffnungen (7) gegenüberliegt und die Verbindungsstange (44) und die Gabel (48) zwischen dem Ventil (3), dem Trägerteil (39) und der Platte (14) liegen.

12. Ventilschütz (2) nach Patentanspruch 1 bis 11, dadurch gekennzeichnet, daß die Steuerelemente (20) zum Bedienen des Ventilschützes (2) ein schwenkbares Bedienorgan (51) sowie mit diesem und mit dem Stellorgan (21) verbundene mechanische Mittel zur Bewegungsumwandlung (53) besitzen, mit denen die Schwenkbewegung des Bedienorgans (51) in eine lineare Bewegung des Stellorgans (21) umgewandelt wird.

13. Ventilschütz (2) nach Patentanspruch 12, dadurch gekennzeichnet, daß das Bedienorgan (51) die Form eines achsgleich mit dem Stellorgan (21) angebrachten Schwenkknopfes hat.

14. Ventilschütz (2) nach Patentanspruch 12 oder 13, dadurch gekennzeichnet, daß die mechanischen Mittel zur Bewegungsumwandlung (53) eine dem Bedienorgan (51) zugeordnete, um ihre Schwenkachse (52) drehbare Zylinderbuchse (54) besitzen, die mit spiralförmigen Rampen (55) versehen ist, wobei eine Querachse (56) von den spiralförmigen Rampen (55) geführt und in einen Kern (57) eingebaut ist, der ausschließlich in Achsrichtung in dem Trägerteil (59) geführt gleitet.

15. Ventilschütz (2) nach Patentanspruch 12 bis 14, dadurch gekennzeichnet, daß das stellorgan (21) eine Stange ist, die mit einem Ende (40) an dem Kern (57) befestigt ist und mit ihrem freien Ende (41) von einem Gleitlager (64) in der Platte (14) des Ventilschützes (2) geführt wird.

16. Ventilschütz (2) nach Patentanspruch 12 bis 15, dadurch gekennzeichnet, daß die Stellstange (21) von einem Dichtungsbalg (65) umgeben ist.

## Claims

1. Valve (2) with flap (3) including a valve body having two openings opposite (7) having two valve seats (6), a flap (3) including a central body (4), two linings (5) on each side of the body (4) able to cooperate with the two seats (6) of the two openings (7) opposite the valve (2), intermediate spacing balls (8) able to cooperate with alveoles (9) fitted in the internal faces (10) opposite the body (4) and linings (5) and an elastic recall member (11) for bringing together the two linings (5), said flap being on the whole mobile and able to be deformed in an axial direction between a retracted state where the balls (8) are housed in the alveoles (9) opposite the body (4) and linings (5) and an expanded state where the balls (8) have left the alveoles (9) of the body (4) offset from those of the linings (5), said flap (3) being able to be located in three characteristic positions, namely respectively firstly a full opening position where it frees the openings (7) of the valve, secondly a sealed closing position where the sealing linings (5) are opposite and applied sealed on the respective seats (6), and thirdly an intermediate position where it is placed opposite the openings (7) of the valve (2) with the linings (5) spaced axially from their respective seats (6), the valve further including a control device (1) including control means (20) for manoeuvering the valve (2), a control member (21) associated with the control means (20) for manoeuvering the valve (2) and mounted sliding between two extreme portions where the flap (3) is in the full opening and sealed closing positions respectively, linking means (23) associated with and controlled by the control member (21) and connected to the flap (3) in such as way as to enable under the control of the control means to manoeuver the valve (2) to move the flap (3) from its full opening position to its intermediate position and from that to its sealed closed position and vice versa, wherein the linking means (23) firstly include support means (24) for supporting the flap (3), these support means enabling the flap (3) to basically pivot around an axis (25) parallel to and spaced from its own axis (12), said support means being integral in rotation with the linings (5) of the flap (3) and connected to the valve body whilst being able to move pivoting between one first extreme opening position and one second extreme position where they are locked for a subsequent unidirectional pivoting, and secondly means (26) for manoeuvering the flap (3) distinct from said support means (24) of the flap (3) and connected to the control member (21) and the body (4) of the flap (3) so as to allow for either its pivoting around its pivoting axis with the linings (5) as long as the support means are not in their second extreme position, or its relative pivoting around its axis (12), the linings (5) being locked in rotation but free with axial sliding when the support means (24) are in their second extreme position so as to make the balls (8) come out of the alveoles (9) of the body (4) of the flap (3) and thus place the flap (3) in its expanded state.

2. Valve (2) with flap (3) according to claim 1, wherein the support means (24) include two elastically ductile spring blades (27) placed opposite and transversally spaced from each other and mounted pivoting at one of their ends (28) around the pivoting axis (25) of the flap (3) and rigidly fixed at the other of their ends to the two sealing linings (5) whilst extending approximately parallel to and outside the linings (5).

3. Valve (2) with flap (3) according to claim 1, wherein the support means (24) include two rigid flanges (32) placed opposite and transversally spaced from each other with fixed spacing mounted pivoting at one of their ends (33) around the pivoting axis (25) and at their other end (34) associated with the linings (5) in their pivoting movement and free with respect to the latter in their axial displacement movement, the flanges (32) extending approximately parallel to and outside the linings (5).

4. Valve (2) with flap (3) according to claim 2 or 3, wherein it comprises at least one fixed stop (37) defining the second extreme position of the support means (24) with which the narrow edge (38) cooperates with at least one ductile spring plate or a rigid flange (27, 32).

5. Valve (2) with flap (3) according to claim 4, wherein the fixed stop (37) is situated close to the pivoting axis (25) of the flap (3).

6. Valve (2) with flap (3) according to any one of claims 1 to 5, wherein it comprises a fixed support piece (39) fixed rigidly to a plate (14) of the valve (2) supporting the pivoting axis (20) of the flap (3) and shaped in such a way as to constitute the fixed stop (37).

7. Valve (2) with flap (3) according to any one of claims 1 to 6, wherein the control member (21) is a guided rod so as to be able to exlusively slide at one of its ends (40) to the manoeuvering control means (20) and joined at its other end (41) to a rod assembly (43) associated with the body (4) of the flap (3).

8. Valve (2) with flap (3) according to claim 7, wherein the rod assembly (43) comprises a linking rod (44) joined at one of its ends (45) to the control rod (21) and at its other end (46) to a fork joint (48) rigidly fixed to the body (4) of the flap (3) and extending with respect to the latter approximately radially and inside its median transverse plane.

9. Valve (2) with flap (3) according to claim 8 in combination with one of claims 2 and 3, wherein the fork link (48), respectively the linking rod (44), may be housed, respectively traverse a free space (36) provided between the spring plates or flanges (27, 32) of the support means (24).

10. Valve (2) with flap (3) according to claim 6 in combination with claims 8 and 9, wherein the control rod (21) projects from an opening (50) provided in the plate (14), the hinge pin (42) with the linking rod (44) being situated close to the plate (14).

11. Valve (2) with flap (3) according to any one of claims 7 to 9, wherein the support piece (39) is offset laterally with respect to the openings (7) of the valve (2), the control rod (21) placed opposite these openings (7) in a median position of the plate (14), the linking rod (44) and the fork joint (49) being situated between the flap (3), the support piece (39) and the plate (14).

12. Valve (2) with flap (3) according to any one of claims 1 to 11, wherein the manoeuvre control means (20) comprise a pivoting manoeuvre member (51) and mechanical movement transformation means (53) connected to the manoeuvre member (51) and the control member (21) so as to transform the pivoting movement of the manoeuvre member (51) into a sliding movement of the control member (21).

13. Valve (2) with flap (3) according to claim 12, wherein the manoeuvre member (51) appears in the form of a button pivoting coaxial with the control member (21).

14. Valve (2) with flap (3) according to claim 12 or 13, wherein the mechanical movement transformation means (53) include a cylindrical jacket (54) associated with the manoeuvre member (51) and mounted with pivoting around its axis (52) provided with helicoid ramps (55), a transverse axis (56) guided by the helicoid ramps (55) and mounted in a core (57) guided axially with sliding exclusively in the support piece (59).

15. Valve (2) with flap (3) according to any one of claims 12 to 14, wherein the control member (21) with a rod fixed at one of its ends (40) to the core (57) and, on its other extreme portion (41), guided by a bearing (64) of the plate (14) of the valve (2).

16. Valve (2) with flap (3) according to any one of claims 12 to 15, wherein the contol rod (21) is surrounded by sealing bellows (65).
